**Europäisches Patentamt**

**European Patent Office**

**Office européen des brevets**

(19)

(11) Veröffentlichungsnummer: **0 155 516**
**B1**

(12) # EUROPÄISCHE PATENTSCHRIFT

(45) Veröffentlichungstag der Patentschrift:
**16.08.89**

(21) Anmeldenummer: **85101785.5**

(22) Anmeldetag: **19.02.85**

(51) Int. Cl.⁴: **B 23 P 19/04**

(54) Verfahren und Vorrichtung zum Montieren von Ventilen im Zylinderkopf eines Motors.

(30) Priorität: **17.03.84 DE 3409904**

(43) Veröffentlichungstag der Anmeldung:
**25.09.85 Patentblatt 85/39**

(45) Bekanntmachung des Hinweises auf die Patenterteilung:
**16.08.89 Patentblatt 89/33**

(84) Benannte Vertragsstaaten:
**AT DE FR GB IT SE**

(56) Entgegenhaltungen:
**EP-A- 0 072 277**
**DD-A- 146 742**
**DE-A- 2 337 589**
**DE-A- 2 358 498**
**DE-A- 2 556 098**
**US-A- 4 381 601**

**SOVIET INVENTIONS ILLUSTRATED, Sektionen P, Q, P 56, Woche B 47, 9. Januar 1980, DERWENT PUBLICATIONS LTD, London**
**SOVIET INVENTIONS ILLUSTRATED, Sektionen P, Q, P 56, Woche 8450, 30. Januar 1985, DERWENT PUBLICATIONS LTD, London**

(73) Patentinhaber: **Johann A. Krause Maschinenfabrik GmbH, Betonstrasse 31, D-2820 Bremen-Farge (DE)**

(72) Erfinder: **Krause, Johann A., Betonstrasse 31, D-2820 Bremen-Farge (DE)**

(74) Vertreter: **Bolte, Erich, Dipl.-Ing. et al, c/o Meissner, Bolte & Partner Patentanwälte Hollerallee 73, D-2800 Bremen 1 (DE)**

## Beschreibung

Die Erfindung betrifft ein Verfahren zum Montieren von Ventilen im Zylinderkopf eines Motors gemäss dem Oberbegriff des Anspruchs 1 (DE-A2 337 589). Des weiteren betrifft die Erfindung eine entsprechende Vorrichtung gemäss dem Oberbegriff des Anspruchs 9.

Ein Hauptproblem bei der Montage von Ventilen im Zylinderkopf eines Motors besteht darin, dass eine Führungsbuchse mit Ventilschaftbohrung zur Aufnahme des jeweiligen Ventilschaftes in ihrer Referenzbohrung im Zylinderkopf mit unvermeidbaren Toleranzen, die bis zu einigen Zehntelmillimetern ausmachen können, eingesetzt ist. Weitere Ungenauigkeiten werden durch das Montagewerkzeug bzw. die Aufnahme der Zylinderköpfe hervorgerufen. Die Ventilschaftbohrung der Führungsbuchse besitzt keine Fase. Auch die Fase am unteren Ventilschaftende ist zu gering, um eine Zentrierwirkung ausüben zu können, wenn die Ventile mit ihren Ventilschäften vertikal von oben in die Ventilschaftbohrung eingesetzt werden, wie dieses aus der DE-A2 337 589 bekannt ist.

Trotz der geringen oder nicht vorhandenen Fase an der Ventilschaftbohrung bzw. am Ventilschaftende des Ventils muss bei der Montage der Ventile im Zylinderkopf sorgfältig darauf geachtet werden, dass beim Einsetzen der Ventilschäfte in die jeweiligen Ventilführungen keine Beschädigungen am Ventilschaft einerseits und an der Führungsbuchse andererseits hervorgerufen werden, um den späteren Betrieb nicht zu beeinträchtigen. Bei automatischen Montagemaschinen (DE-A2 337 589) ist man bisher davon ausgegangen, einen vertikal geführten, absenkbaren Halter zu verwenden, um mit diesem den Ventilschaft möglichst genau auf die Öffnung der Ventilführungsbuchse zuzubewegen. Versuche haben jedoch gezeigt, dass es dabei häufig zu zwar geringen, jedoch nicht akzeptablen Abweichungen der Relativstellung von Ventilschaft und Ventilführung kommt, mit der Folge, dass am Ventilschaft und an der Ventilführung Materialschäden durch Abrieb oder dgl. auftreten.

Grundsätzlich besteht zwar die Möglichkeit, während der Montage der Ventile zum Ausgleich der unvermeidbaren Ungenauigkeiten der Abmessung der Ventilführung zu vermessen, daraufhin eine Korrektur der Relativstellung von Ventilschaft und Ventilführung vorzunehmen und dann erst den Ventilschaft und Ventilführung vorzunehmen und dann erst den Ventilschaft in die Ventilführung einzusetzen. Ein derartiges Vorgehen ist jedoch sehr aufwendig und zeitraubend und daher in der Praxis noch nicht eingesetzt worden. Das liegt vor allem an den unvermeidlicherweise entstehenden Taktzeitproblemen. Ausserdem können bei einer derartigen Vertikalzuführung der Ventilschäfte Beschädigungen der Ventilschaftbohrungen und des Ventilschaftes nicht zuverlässig ausgeschlossen werden.

Aufgabe der Erfindung ist es daher, ein Verfahren und eine Vorrichtung der eingangs genannten Art anzugeben, bei denen ohne eine gegenseitige Ausrichtung des Ventilschafts zur Ventilführung eine automatische Montage von Ventilen in Zylinderköpfen eines Motors in zeitsparender und zuverlässiger Weise ohne Beschädigungen am Ventilschaftende bzw. der Ventilschaftbohrung möglich ist.

Verfahrensmässig wird diese Aufgabe durch die Merkmale des Anspruchs 1 gelöst. Bei diesem Verfahren wird in vorteilhafter Weise erreicht, dass die Ventile nicht im eingespannten Zustand in ihre Ventilführung hineingedrückt werden und dadurch Beschädigungen ausgesetzt sind; vielmehr erfolgt in der Schrägstellung der Ventile eine Zentrierung aufgrund der Geometrie der in Eingriff kommenden Teile, wie es an sich bereits aus der zum Einsetzen von Kolben in Zylindern bekannten Vorrichtung gemäss der DE-A2 358 498 bekannt ist, wobei nach dem erfindungsgemässen Verfahren jedoch die Ventile unter ihrem Eigengewicht in die jeweilige Ventilschaftbohrung hineingleiten. Dadurch werden mechanische Beeinträchtigungen bei der Ventilmontage zuverlässig vermieden, ohne dass es zu Beschädigungen an der Fase des Ventilschaftes oder der Oberkante der Ventilschaftbohrungen kommen kann. Dies ist bei dem bekannten Verfahren nach der DE-A2 358 498 noch nicht gewährleistet, da hier die Kolben noch beim Einsetzen in die Zylinder von den Greifwerkzeugen gehalten sind, wodurch mechanische Beeinträchtigungen nicht vollständig ausgeschlossen sind.

Die Ventile werden bei dem erfindungsgemässen Verfahren in einer Schrägstellung des Ventilschaftes von 5°–45°, vorzugsweise von 25°, gegenüber der Achse der Ventilführung durch den Strömungskanal eingeführt und in dieser Schrägstellung auf bzw. in die Öffnung der Ventilschaftbohrung eingesetzt, gegebenenfalls unter Anlage gegen den am Strömungskanal des Zylinderkopfes angeordneten Ventilsitz.

Zweckmässigerweise wird der Klemmbackeneingriff gelockert, sobald das Ventilschaftende in die Öffnung der Ventilschaftbohrung eingesetzt worden ist, damit sich der Ventilschaft selbst zentrieren kann. Dabei wird vorzugsweise Unterstützung zum Zentrieren dadurch gegeben, dass das Ventil mit einer leichten Schwingbewegung, vorzugsweise zur Achse des Ventilschaftes, beaufschlagt wird. Dabei liegt der Ventilschaft dann nur auf der Spannfläche einer der beiden Klemmbacken an.

Sobald die Zentrierung des Ventilschafts in der Ventilschaftbohrung der Ventilführung erreicht ist, wird das Ventil mit seinem Ventilschaft aufgerichtet und anschliessend die Klemmbacken des Greifwerkzeuges noch weiter auseinanderbewegt, so dass das Ventil unter der Wirkung seines Eigengewichts in die Ventilwirkung hineingleiten kann, und zwar ungehindert zwischen den Klemmbacken hindurch.

Selbstverständlich ist es auch möglich, nicht nur einzelne Ventile einzusetzen, sondern auch Gruppen von Ventilen gleichzeitig in den Zylinderkopf einzubringen, und dort zentriert in ihre jeweiligen Ventilführungen einzubringen. Die Bewegung und Steuerung der Ventile während der Montage wird zweckmässigerweise mit Sensoren abgetastet.

Eine Vorrichtung zur Lösung der eingangs genannten Aufgabe zeichnet sich durch die Merkmale des Anspruchs 9 aus. Mit dieser Greifeinrichtung ist es in ebenso einfacher wie vorteilhafter Weise möglich, die Ventile sicher und schonend zu greifen bzw. zu halten und auch die Ventile gegenüber ihrer Ventilschaftbohrung zu verschwenken zum Herantasten und Zentrieren der Ventile.

Alternativ kann anstelle des Saugkopfes auch ein mechanisches Greiforgan an der Greifeinrichtung angeordnet sein, welches beispielsweise am Rand des Ventiltellers angreift.

Die Greifeinrichtung ist dabei um eine quer zur Längsachse der Lineareinheit verlaufende Achse schwenkbar gelagert, und zwar ist die Greifeinrichtung am Führungsgehäuse an einem Auslegearm angebracht und in den Richtungen von den drei vorzugsweise senkrecht zueinander stehenden Koordinatenachsen bewegbar.

Es erweist sich als vorteilhaft, wenn die Greifeinrichtung eine an den Auslegearm angeschlossene Kolben-Zylinder-Einheit aufweist, mit der die Greifeinrichtung in eine Schrägstellung gegenüber der Vertikalen bringbar und um eine quer zur Vertikalen verlaufende Achse verschwenkbar ist. Dabei ist keine aufwendige Mechanik erforderlich, um die gesamte Greifeinrichtung in die gewünschte Schrägstellung zu bringen und in dieser zu halten. Der Saugkopf einerseits ist in Längsrichtung der Lineareinheit und das mechanische Greifwerkzeug andererseits quer zur Lineareinheit unabhängig voneinander bewegbar und steuerbar.

Vorteilhafte Weiterbildungen der erfindungsgemässen Vorrichtung sind in den Unteransprüchen angegeben. Zweckmässigerweise wird dabei eine Klemmfläche mit im Querschnitt prismatischer Kontur in Form eines Vieleckes verwendet, wobei zumindest die eine Spannfläche einen länglichen, beispielsweise trogförmigen Querschnitt besitzen wird, um ein geeignetes Auflager an drei vorzugsweise um ca. 120° zueinander versetzten Flächen während der Zentrierung und Einführung des Ventilschaftendes in die Öffnung der Ventilführung zu bilden. Selbstverständlich können die Klemmflächen der Klemmbacken auch eine andere Konfiguration aufweisen, solange ein schonendes Festklemmen der Ventile zwischen den Klemmbacken gewährleistet ist.

Der Saugkopf der Lineareinheit kann bei der erfindungsgemässen Vorrichtung eine Doppelfunktion ausüben, nämlich einerseits eine Haltefunktion beim Transport der Ventile aus dem Transportbehälter zum Zylinderkopf und andererseits die Funktion eines Schubwerkzeugs zum Hineinschieben des Ventilschaftes in die Ventilführung bzw. durch eine Ventilschaftdichtung hindurch, wenn der Ventilschaft bereits in der Ventilführung sitzt.

Die Erfindung wird nachstehend, auch hinsichtlich weiterer Merkmale und Vorteile, anhand der Beschreibung von Ausführungsbeispielen und unter Bezugnahme auf die beiliegende Zeichnung näher erläutert. Die Zeichnung zeigt in

Fig. 1 eine schematische Seitenansicht einer Montageanlage mit der erfindungsgemässen Vorrichtung;

Fig. 2. eine schematische Seitenansicht der erfindungsgemässen Vorrichtung des Bereiches I in Fig. 1;

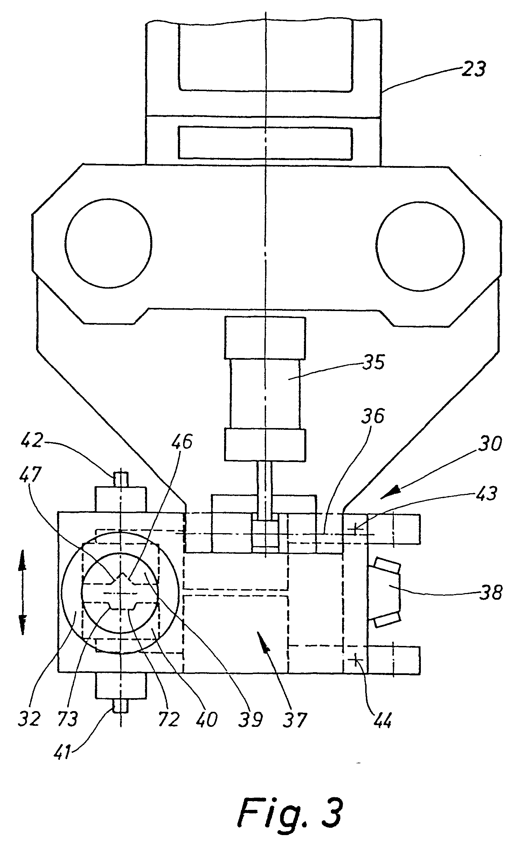

Fig. 3 eine Teildraufsicht der erfindungsgemässen Vorrichtung, teilweise im Schnitt, in Richtung des Pfeiles II in Fig. 2;

Fig. 4 eine schematische Seitenansicht im Schnitt eines Transportbehälters für Ventile;

Fig. 5 eine schematische Seitenansicht, teilweise im Schnitt der Ausgangssituation beim Erfassen eines Ventils im Transportbehälter;

Fig. 6 eine schematische Seitenansicht, teilweise im Schnitt zur Erläuterung der Einführung des Ventils in den Zylinderkopf;

Fig. 7 einen Schnitt durch das mechanische Greifwerkzeug längs der Linie VI–VI in Fig. 6;

Fig. 8 eine schematische Seitenansicht, teilweise im Schnitt zur Erläuterung des Einsetzens des Ventilschaftendes in die Öffnung der Ventilführung in der Position, wo das Greifwerkzeug öffnet;

Fig. 9 eine Darstellung im Schnitt längs der Linie VIII–VIII in Fig. 8;

Fig. 10 eine schematische Seitenansicht, teilweise im Schnitt zur Erläuterung der weiteren Einführung des Ventilschaftendes in die Ventilführung;

Fig. 11 eine schematische Seitenansicht, teilweise im Schnitt, die das in die Führungsbuchse eingesetzte Ventil zeigt;

Fig. 12 einen Querschnitt durch das mechanische Greifwerkzeug längs der Linie XI–XI in Fig. 11 zur Erläuterung der Bewegung seiner Klemmbacken; und in

Fig. 13 eine Seitenansicht, teilweise im Schnitt zur Erläuterung der vollständigen Einführung des Ventilschaftes in die Ventilführung.

Das vorliegende Ausführungsbeispiel zeigt eine Montagemaschine 20, mit der Ventile 64 in einem Zylinderkopf 1 eines Motors montierbar sind, nämlich in eine Ventilschaftbohrung 68 einer im Zylinderkopf 61 angeordneten Führungsbuchse 63 der Ventile 64 einschiebbar sind.

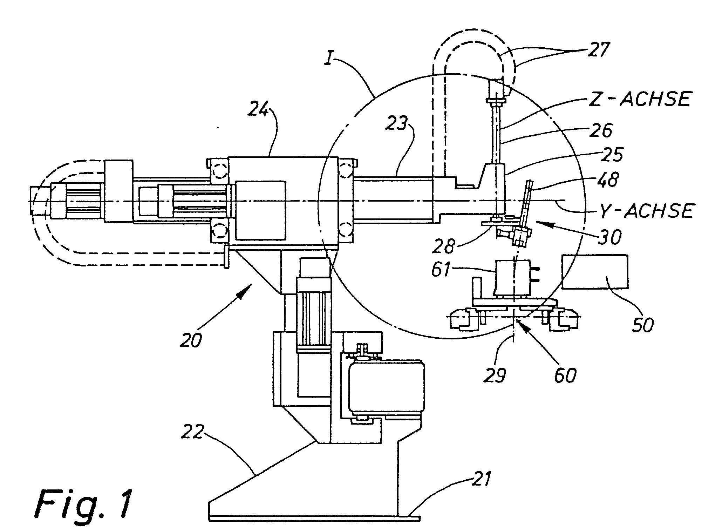

Die Fig. 1 zeigt die Gesamtansicht der Montagemaschine 20 zum automatischen Montieren der Ventile 64. Auf einem Fundament 21 erkennt man einen Sockel 22, an dem ein Führungsgehäuse 24 angeordnet ist, in dem ein horizontal verfahrbarer Schlitten 23 verschieblich gelagert ist. Am vorderen Ende des Schlittens 23 befindet sich eine Halterung 25 für eine Greifeinrichtung, die insgesamt mit dem Bezugszeichen 30 bezeichnet ist. Das Führungsgehäuse 24 ist mit geeigneten Steuer- und Antriebseinrichtungen versehen, um in bezug auf eine Förderbahn die erforderlichen Bewegungen vorzunehmen, um aus einem Transportbehälter 50 Ventile zu entnehmen und diese dem Zylinderkopf 61 zuzuführen, der sich auf einer auf der Förderbahn angeordneten Palette bzw. einem Arbeitstisch befindet, und zwar in der Regel festgespannt. Bei der Förderbahn handelt es sich im vorliegenden Ausführungsbeispiel um eine Rollenbahn, nämlich eine Friktionsrollenbahn 60 bekannter Bauart.

Die Greifeinrichtung 30 am vorderen Ende des Schlittens 23 des Führungsgehäuses 24 kann Bewegungen in Richtung der Y-Achse und ggf. in einer weiteren Richtung in einer horizontalen Ebene ausführen. Eine senkrecht dazu verlaufende Bewegung in Richtung der Z-Achse erfolgt mittels einer Hubeinrichtung 26 vertikal zur Halterung 25. Der Antrieb der Hubeinrichtung 26 erfolgt über entsprechende Steuerleitungen 27, die am Schlitten 23 angeschlossen sind. An seinem unteren Ende weist die Hubeinrichtung 26 einen Auslegearm 28 auf, an dem die Greifeinrichtung 30 schwenkbar gelagert ist, und zwar um eine horizontale Drehachse 36 quer zur Z-Achse.

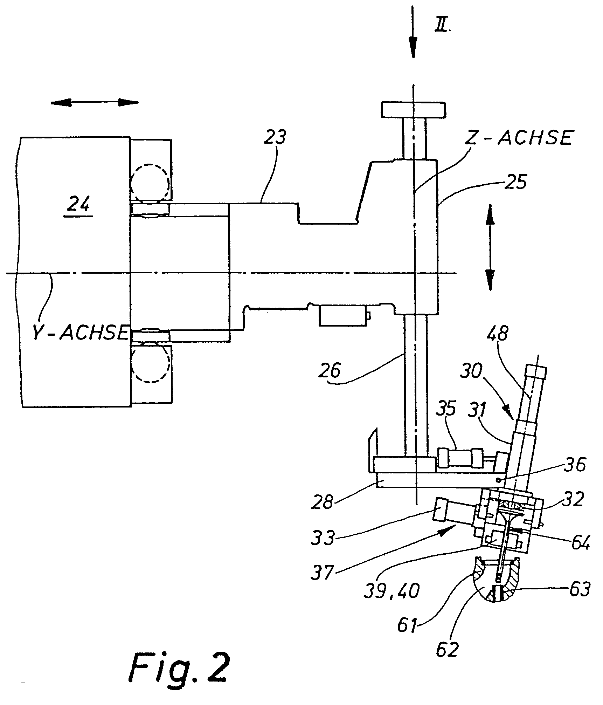

Wie aus Fig. 1 und 2 ersichtlich, besteht die Greifeinrichtung 30 im wesentlichen aus einer Lineareinheit 31 mit Saugkopf 32 einerseits sowie einem mechanischen Greifwerkzeug 37 andererseits, das zwei Klemmbacken 39 und 40 besitzt, die mit einer gemeinsamen Kolben-Zylinder-Einheit 33 bewegbar sind. Zu diesem Zweck sind die Klemmbacken 39 und 40 um Drehachsen 43 und 44 drehbar gelagert und können so weit auseinanderbewegt werden, bis ihre rückseitigen Enden gegen einen Anschlag 38 anliegen. In diesem Augenblick ist die maximale Spreizung der Klemmbacken 39, 40 erreicht, die ausreicht, einen Ventilteller 66 der Ventile 64 zwischen den Klemmbacken 39, 40 hindurchzulassen.

Des weiteren zeigen die Fig. 1 und 2 die Greifeinrichtung 30 in der für das erfindungsgemässe Verfahren typischen Schrägstellung, in der eine Längsachse 48 der Greifeinrichtung 30 um einen Winkel von 5°–45°, beispielsweise 25°, gegenüber einer Längsachse 29 einer Führungsbuchse 63 im Zylinderkopf 61 geneigt ist. Die Schrägstellung folgt mit einer Kolben-Zylinder-Einheit 35 (vgl. Fig. 2), die sich am Auslegerarm 28 der Hubeinrichtung 26 abstützt und die Greifeinrichtung 30 in die gewünschte Schrägstellung bringt und in dieser Schrägstellung arretiert, wobei die Drehbewegung um die Drehachse 36 am Auslegerarm 28 erfolgt.

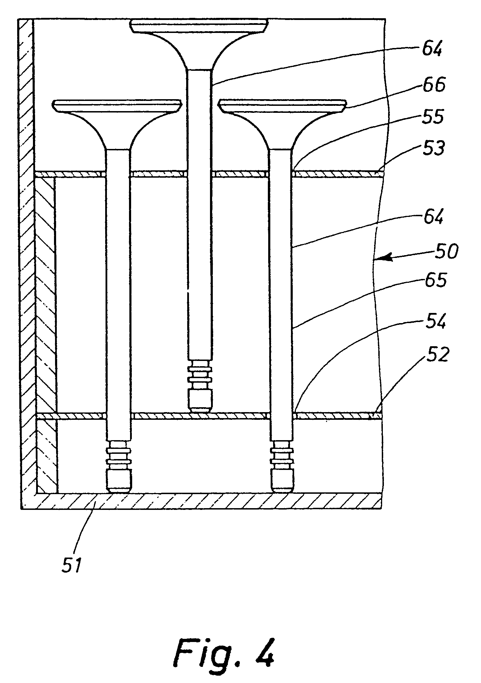

Die im Zylinderkopf 61 zu montierenden Ventile 64 werden mit einem Transportbehälter 50 angeliefert, wie er beispielsweise in Fig. 4 schematisch dargestellt ist. Dabei handelt es sich um einen Transportbehälter 50 mit einem Boden 51 und zwei in verschiedenen Höhen eingezogenen Zwischenböden 52 und 53, die mit Durchgangsöffnungen 54 bzw. 55 versehen sind. Somit stehen die Ventile 64 auf ihren Ventilschäften 65, nämlich vorzugsweise ihren Ventilschaftenden 67 auf dem Boden 51 bzw. dem unteren Zwischenboden 52 auf, während sie in der Nähe ihrer Ventilteller 66 in den Durchgangsöffnungen 55 des oberen Zwischenbodens 53 aufrecht gehalten werden.

Wie die Fig. 4 auch zeigt, stehen die Ventile 64 abwechselnd auf dem Boden 51 bzw. dem unteren Zwischenboden 52, sind also abwechselnd höhenversetzt im Transportbehälter 50 angeordnet.

Der Transportbehälter 50 ist zweckmässigerweise oben offen, damit die Ventile 64 von der Oberseite an ihren Ventiltellern 66 erfasst werden können. Dabei können die Ventile 64 entweder einzeln aus dem Transportbehälter 50 entnommen werden oder aber in Gruppen, wobei dann mehrere Ventile 64 gleichzeitig im Zylinderkopf 61 montiert werden können. Da die Positionierungen der Ventile 64 im Transportbehälter 50 nicht mit dem Abstand der Ventile 64 untereinander im Zylinderkopf 61 übereinstimmen, ist dann eine nicht dargestellte Einrichtung vorgesehen, die die Position der Ventile 64 im Transportbehälter 50 den Abständen innerhalb des Zylinderkopfes 61 angleicht.

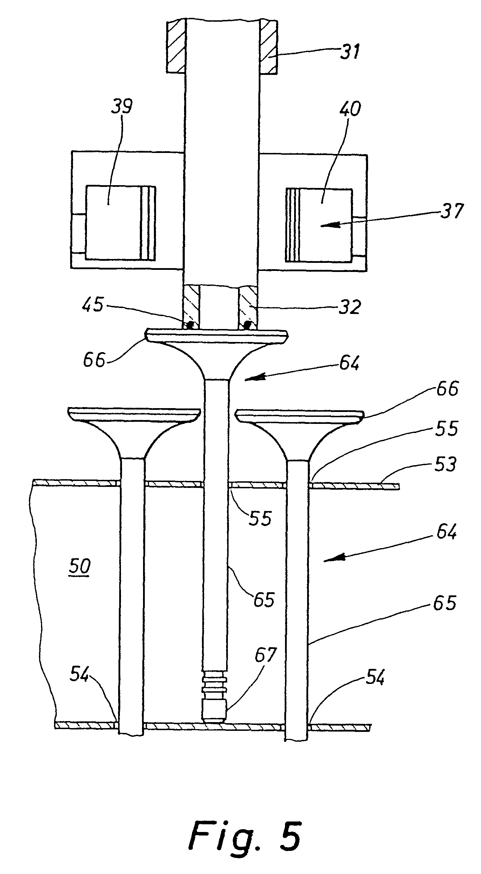

Die Montage eines einzelnen Ventils im Zylinderkopf eines Motors wird nachstehend in den verschiedenen Stadien unter Bezugnahme auf Fig. 5–13 näher erläutert. Dabei fährt die Montagemaschine 20 zunächst mit der Greifeinrichtung 30 über den neben der Friktionsrollenbahn 60 angeordneten Transportbehälter 50. Dann wird von der Lineareinheit 31 der Saugkopf 32 entlang der Längsachse 48 abgesenkt und mit seiner Dichtung 45 auf die Oberseite des Ventiltellers 66 eines zu montierenden Ventils 64 aufgesetzt, das mit seinem Ventilschaft 65 durch die Durchgangsöffnung 55 im Transportbehälter 50 hindurchragt und mit seinem Ventilschaftende 67 auf dem Zwischenboden 52 desselben aufliegt.

Wenn der Saugkopf 32 auf dem Ventilteller 66 aufliegt, wird in seinem Innern ein Vakuum aufgebaut, gesteuert durch einen Vakuum-Elektroschalter der Lineareinheit 31. Dadurch kann das Ventil 64 so weit aus dem Transportbehälter 50 herausgehoben werden, bis das mechanische Greifwerkzeug 37 mit seinen beiden Klemmbacken 39, 40 den Ventilschaft 65 positioniert greifen kann.

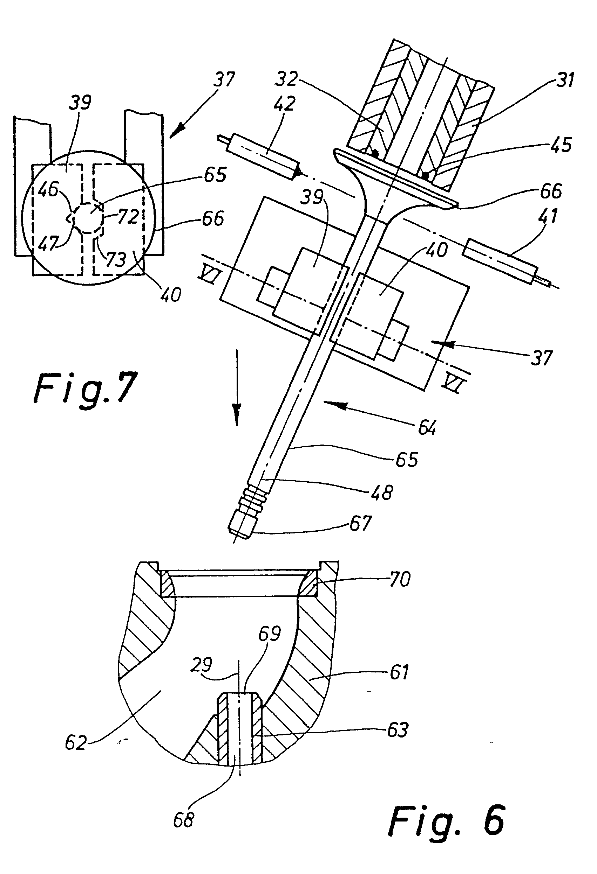

Fig. 6 zeigt das nächste Stadium des Montagevorganges. Das Ventil 64 ist vom Greifwerkzeug 37 mit den beiden Klemmbacken 39 und 40 erfasst und wird bei schräg gestellter Greifeinrichtung 30 durch die Öffnung eines Strömungskanals 62 im Zylinderkopf 61 eingeführt, und zwar durch den Ventilsitz 70 hindurch. Die Schrägstellung zwischen der Längsachse 48 der Greifeinrichtung 30 einerseits und der Längsachse 29 der Führungsbuchse 63 bzw. ihrer Ventilschaftbohrung 68 ist deutlich erkennbar. Man erkennt in Fig. 6 ferner einen Signalgeber 42 und einen Sensor 41 zwischen dem mechanischen Greifwerkzeug 37 und der Lineareinheit 31 mit dem Saugkopf 32, und zwar oberhalb der gegenüberliegenden Klemmbacken 39 und 40.

Der Klemmeingriff der Klemmbacken 39 und 40 des Greifwerkzeuges 37 ist in Fig. 7 dargestellt, wobei der Rand des Ventiltellers 66 schematisch angedeutet ist. Man erkennt, dass der Ventilschaft 65 von den beiden Spannflächen 46 und 47 der Klemmbacke 39 und der Spannfläche 72 der Klemmbacke 40 festgehalten wird. Dabei bilden die Spannflächen 46 und 47 der Klemmbacken 39 im Querschnitt die Kontur eines Polygonzuges, nämlich eines Dreiecks. Die Klemmbacke 40 hat dagegen einen trogförmigen Querschnitt, dessen Basis breiter ist als der Durchmesser des Ventilschaftes 65 ist, wobei das Ventil 64 von der Klemmbacke 40 nur mit der Spannfläche 72 gehalten ist, wogegen die Seitenflächen 73 nicht am Ventilschaft 65 anliegen.

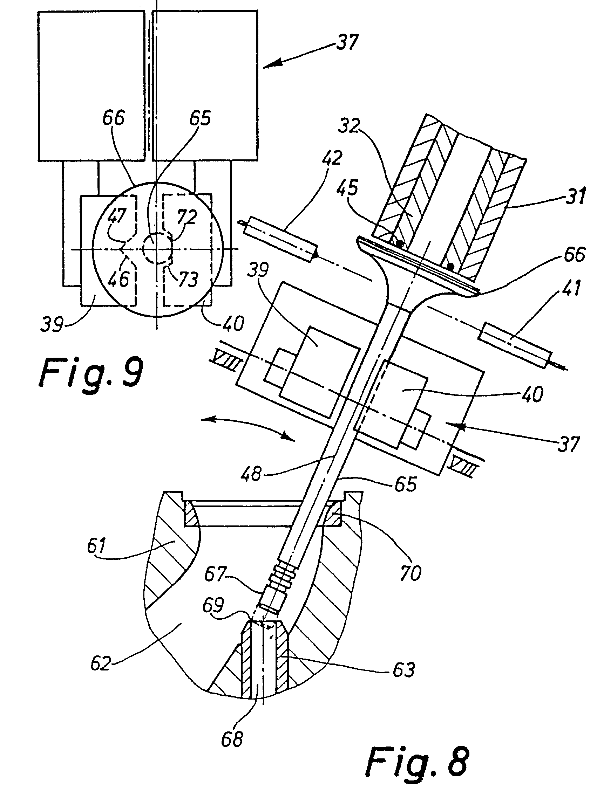

Das nächste Stadium der Montagebewegung ist in Fig. 8 dargestellt. Das Ventil 64 ist mit seinem Ventilschaft 65 bzw. seinem Ventilschaftende 67 ganz dicht an die Öffnung 69 der Ventilschaftbohrung 68 in der Führungsbuchse 63 herangeführt. In diesem Augenblick wird der Klemmeingriff der Klemmbacken 39 und 40 des Greifwerkzeuges 37 leicht geöffnet, so dass das Ventil 64 nur mit seinem Eigengewicht auf die Ventilführung 63 gleitet und dort anschnäbelt. Dazu kann bereits der Saugkopf 32 vom Ventilteller 66 gelöst sein. Durch die schräge Position des Ventilschaftes 65 und sein Aufliegen auf der Ventilführung 63 ergibt sich aus der Geometrie heraus eine maximale Zentriermöglichkeit, wenn das Ventilschaftende 67 in die Ventilschaftbohrung 68 der Ventilführung 63 eintaucht. Durch die Zentrierung des nicht eingespannten, sondern lediglich von der einen Spannfläche 72 der Klemmbacke 40 unterstützten Ventiles 64 wird unabhängig von Toleranzen die gewünschte und erforderliche Position erreicht, die für den Montagevorgang der Ventilführung 63 erforderlich ist.

Das Hineingleiten des Ventilschaftes 65 bzw. seines Ventilschaftendes 67 in die Ventilschaftbohrung 68 kann dadurch unterstützt und erleichtert werden, dass man die Greifeinrichtung 30 eine leichte Schwingbewegung quer zur Längsachse 48 ausführen lässt, damit das angefasste Ventilschaftende 67 noch besser in die Öffnung 69 der Ventilschaftbohrung 68 hineingeleitet bzw. sich dort unter der Wirkung seines Eigengewichtes zentriert. Hierbei wird der Ventilschaft 65 seitlich durch eine der gegenüberliegenden Seitenflächen 73 der Klemmbacken zusätzlich bei Bedarf geführt.

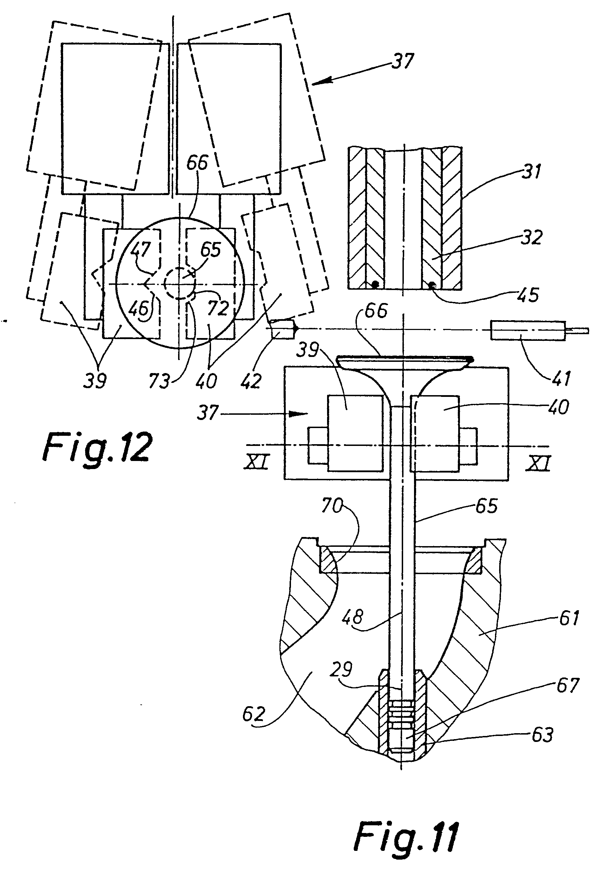

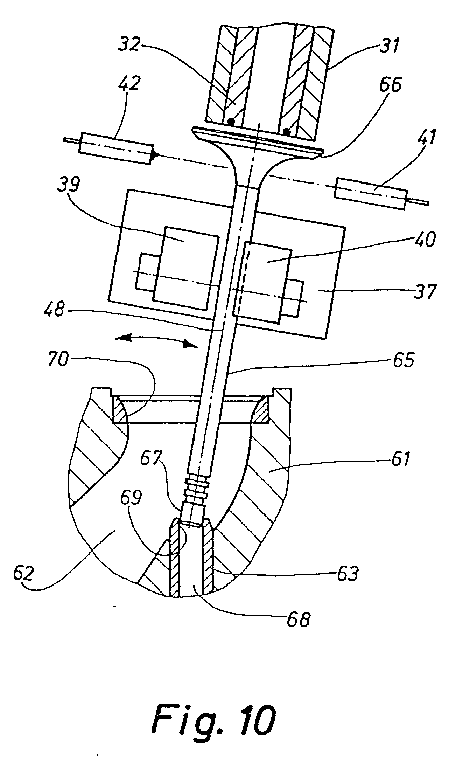

Das nächste Stadium ist in Fig. 10 dargestellt. Man erkennt, dass das Ventilschaftende 67 bereits in die Öffnung 69 der Ventilschaftbohrung 68 hineingeglitten ist. Dementsprechend erfolgt nun das Aufrichten der Greifeinrichtung 30 bzw. des von ihm gehaltenen Ventils 64, das sich mit seinem Ventilschaft 65 immer noch auf der einen Spannfläche 72 der Klemmbacke 40 abstützt. Auch in diesem Stadium kann die Montage durch das fortdauern leichter Schwingbewegungen des Greifwerkzeuges 37 unterstützt werden.

Das nächste Stadium der Montage ist in Fig. 11 dargestellt. Hierbei sitzt das Ventilschaftende 67 bereits in der Führungshülse 63 und hat seine vertikale Stellung eingenommen, d.h. die Längsachse 29 der Führungshülse 63 und die Längsachse 48 der Greifeinrichtung 30 sind miteinander ausgefluchtet. In diesem Stadium werden die beiden Klemmbacken 39 und 40, wie in Fig. 12 dargestellt, auseinanderbewegt, so dass sie den Ventilteller 66 so weit freigeben, dass sich das Ventil 64 vollständig zwischen den Klemmbacken 39 und 40 hindurchbewegen kann und vollständig in die Führungsbuchse 63 im Zylinderkopf 61 hineinrutschen kann. Um eine Beschädigung insbesondere der Unterseite des Ventiltellers 66 durch die Klemmbacken 39, 40 zu vermeiden, kann das Ventil 64 vom Saugkopf 32 auch so lange gehalten werden, bis die beiden Klemmbacken 39 bzw. 40 aus der Bahn des Ventiltellers 66 herausgeschwenkt sind, wenn dieser seine Abwärtsbewegung ausführt. Das Öffnen der Klemmbacken 39, 40 und ggf. das Lösen des Ventils 64 vom Saugkopf 32, d.h. das Abbauen des Saugvakuums wird durch den Sensor 41 und den Signalgeber 42 oberhalb der Klemmbacken 39, 40 in Abhängigkeit von der Eintauchtiefe des Ventils 64 in der Ventilschaftbohrung 68 am Ventilteller 66 überwacht bzw. gesteuert.

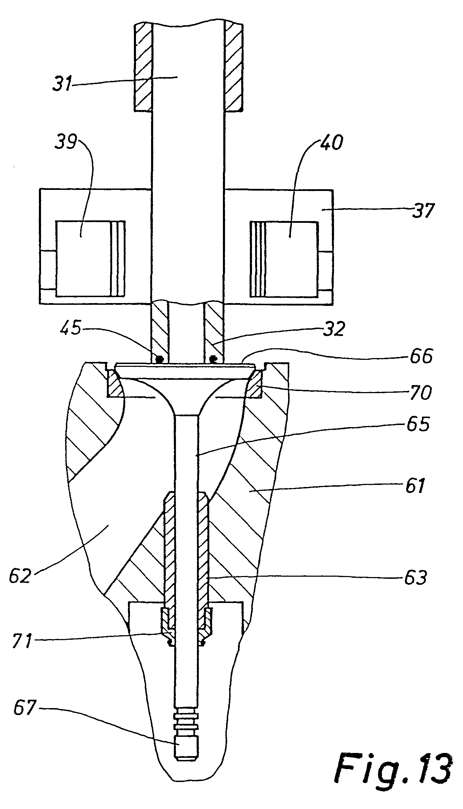

Wenn die Ventilführung bzw. ihre Ventilschaftbohrung 68 bereits mit einer Ventilschaftdichtung 71 (Fig. 13) versehen ist, kann die Anordnung auch so getroffen werden, dass das Ventil 64 mit seinem Ventilschaftende 67 sich zunächst auf diese Ventilschaftdichtung 71 setzt und anschliessend die beiden Klemmbacken 39, 40 auseinanderbewegt werden, ohne dass der Ventilteller 66 an den Oberkanten der Klemmbacken 39 und 40 entlangkratzt. Eine Sensorüberwachung kann dann entfallen.

Schliesslich wird dann das Ventil 64 vollständig in die Führungsbuchse 63 hinein- und durch die Ventilschaftdichtung 71 hindurchgedrückt, wie es in Fig. 13 angedeutet ist. Zu diesem Zweck wird der Saugkopf 32 von der Lineareinheit 31 ausgefahren und vertikal abgesenkt, wobei er mit seiner Dichtung 45 gegen den Ventilteller 66 zur Anlage kommt und das Ventil 64 vollständig in die Führungsbuchse 63 hineindrückt, bis der Ventilteller 66 gegen den Ventilsitz 70 zur Anlage kommt. Während dieser Durchschubbewegung bleiben die beiden Klemmbacken 39 und 40 in ihrer ausgerückten Stellung, wie es in Fig. 13 auch schematisch angedeutet ist.

Auch das Durchdrücken des Ventils 64 kann durch den Signalgeber 42 ausgelöst werden, wenn beispielsweise der Sensor 41 ein entsprechendes Signal vom Signalgeber 42 erhält (vgl. Fig. 11), wobei dieses Signal dem Zustand entspricht, wenn der Ventilschaft 64 mit seinem Ventilschaftende 67 auf der Ventilschaftdichtung 71 aufliegt. Dieses Durchdrücken des Ventils 64 kann aber auch ausserhalb der Montagestation in einer nachfolgenden Station erfolgen.

Wie bereits erwähnt, können auch mehrere Ventile gleichzeitig im Zylinderkopf 61 montiert werden. Dann werden eine entsprechende Anzahl von Greifeinrichtungen 30 mit Paaren von Saugköpfen 32 und mechanischen Greifwerkzeugen 37 für jedes Ventil 64 vorgesehen. Gegebenenfalls können auch mehrere Saugköpfe 32 an einer Lineareinheit 31 angebracht sein, die von einzelnen Steuerleitungen 27 beaufschlagt werden.

## Patentansprüche

1. Verfahren zum Montieren von Ventilen (64) im Zylinderkopf (61) eines Motors mittels einer Greifeinrichtung (30), bei dem die Ventile (64) mit ihren Ventilschäften (65) in Ventilschaftbohrung (68) des Zylinderkopfes (61) frei eingeführt werden, dadurch gekennzeichnet, dass die Ventile (64) mit der Greifeinrichtung (30) aus einem Transportbehälter (50) entnommen, mit ihren Ventilschäften (65) in eine Schrägstellung zu den jeweiligen Ventilschaftbohrungen (68) gebracht und in dieser Schrägstellung die Ventile (64) auf Öffnungen (69) von Führungsbuchsen (63) der Ventilschaftbohrungen (68) im Zylinderkopf (61) aufgelegt werden, anschliessend die Ventile (64) aufgerichtet werden zum Ausfluchten ihrer Achsen mit den Achsen der Ventilschaftbohrungen (68) und hiernach die Greifeinrichtung (30) geöffnet und die Ventile (64) durch ihr Eigengewicht in die Ventilschaftbohrungen (68) eingelassen werden.

2. Verfahren nach Anspruch 1, dadurch gekennzeichnet, dass das jeweilige Ventil (64) mit einer Schrägstellung seines Ventilschaftes (65) mit einem Winkel von 5°–45°, vorzugsweise 25°, gegenüber der Achse der Ventilführung auf die Öffnung der Führungsbuchse (63) aufgelegt wird.

3. Verfahren nach einem oder mehreren der Ansprüche 1 oder 2, dadurch gekennzeichnet, dass das jeweilige Ventil (64) nach dem Auflegen des Ventilschaftendes (67) auf die Öffnung (69) der Ventilschaftbohrung (68) mit einer leichten Schwingbewegung beaufschlagt wird.

4. Verfahren nach Anspruch 3, dadurch gekennzeichnet, dass die Schwingbewegung quer zur Achse des Ventilschaftes (65) erfolgt.

5. Verfahren nach einem oder mehreren der Ansprüche 1 bis 4, dadurch gekennzeichnet, dass die Bewegungen der Ventile (64) bei dem Montagevorgang mit Sensoren (41) abgetastet und gesteuert werden.

6. Verfahren nach einem oder mehreren der Ansprüche 1 bis 5, dadurch gekennzeichnet, dass nach dem Auflegen des Ventilschaftes (65) auf die Öffnung (69) der Ventilschaftbohrung (68) das Greifwerkzeug (37) teilweise geöffnet und nach dem Ausfluchten der Achsen von Ventilschaft (65) und Ventilschaftbohrung (68) das Greifwerkzeug (37) soweit ständig auseinanderbewegt wird, dass das Ventil (64) vollständig in die Ventilschaftbohrung (68) eingeführt werden kann.

7. Verfahren nach einem oder mehreren der Ansprüche 1 bis 6, dadurch gekennzeichnet, dass das Ventil (64) durch eine Linearbewegung mindestens eines Teiles der Greifeinrichtung (30) mit seinem Ventilschaft (65) durch die Ventilführung und ggf. durch eine daran angebrachte Ventilschaftdichtung (71) hindurchgedrückt wird.

8. Verfahren nach einem oder mehreren der Ansprüche 1 bis 7, dadurch gekennzeichnet, dass mehrere Ventile (64) gleichzeitig aus einem Transportbehälter (50) entnommen und mit ihren Ventilschäften (65) in die jeweiligen Ventilführungen eingesetzt werden.

9. Vorrichtung zum Montieren von Ventilen (64) im Zylinderkopf (61) eines Motors, mit einer Greifeinrichtung (30) für die Zuführung der Ventile (64) zum Zylinderkopf (61), die zwei unabhängig voneinander betätigbare Halteorgane aufweist und sowohl geradlinig bewegbar als auch schwenkbar ist, dadurch gekennzeichnet, dass eines der Halteorgane als ein an einer Lineareinheit (31) angebrachter, geradlinig bewegbarer Saugkopf (32) ausgebildet und das andere Halteorgan als ein quer zur Bewegungsrichtung des Saugkopfs (32) angeordnetes mechanisches Greifwerkzeug (37) ausgebildet ist, das zwei relativ zueinander bewegbare Klemmbacken (39, 40) aufweist und dass die Greifeinrichtung (30) um eine quer zur Längsachse (48) der Linareinheit (31) verlaufende Achse (36) schwenkbar gelagert ist.

10. Vorrichtung nach Anspruch 9, dadurch gekennzeichnet, dass die Greifeinrichtung (30) an einem mit einem Führungsgehäuse (24) verbundenen Auslegearm (28) angebracht und in den Richtungen von drei senkrecht zueinander stehenden Koordinatenachsen (X, Y, Z) bewegbar ist.

11. Vorrichtung nach Anspruch 9 oder 10, dadurch gekennzeichnet, dass die Greifeinrichtung (30) eine an den Auslegearm (28) angeschlossene Kolben-Zylinder-Einheit (35) aufweist, mit der die Greifeinrichtung (30) in eine Schrägstellung gegenüber der Vertikalen (Z) bringbar und um die quer zur Vertikalen verlaufende Achse (36) verschwenkbar ist.

12. Vorrichtung nach einem oder mehreren der Ansprüche 9 bis 11, dadurch gekennzeichnet, dass der Saugkopf (32) in Längsrichtung der Lineareinheit (31) und das mechanische Greifwerkzeug (37) quer zur Lineareinheit (31) unabhängig voneinander bewegbar und steuerbar sind.

13. Vorrichtung nach einem oder mehreren der Ansprüche 9 bis 12, dadurch gekennzeichnet, dass die Klemmbacken (39, 40) des mechanischen Greifwerkzeugs (37) vollständig aus der Bewegungsbahn der Lineareinheit (31) und der von ihr getragenen Ventile (64) herausbewegbar, insbesondere herausschwenkbar sind.

14. Vorrichtung nach einem oder mehreren der Ansprüche 9 bis 13, dadurch gekennzeichnet, dass Spannflächen (46, 47) der beiden Klemmbacken (39, 40) des Greifwerkzeugs (37) im Querschnitt die Kontur eines ggf. symmetrischen Polygonzuges, z.B. eines Fünfecks oder Prismas bilden.

15. Vorrichtung nach einem oder mehreren der Ansprüche 9 bis 14, dadurch gekennzeichnet, dass zumindest eine Klemmbacke (40) einen trogförmigen Querschnitt aufweist, dessen Basis als Spannfläche (72) ausgebildet ist und breiter als der Durchmesser des Ventilschaftes (65) ist.

16. Vorrichtung nach Anspruch 15, dadurch gekennzeichnet, dass die Spannfläche (72) der Klemmbacke (40) den Ventilschaft (65) in der Schrägstellung des Ventils (64) als Auflager abstützt, derart, dass der Ventilschaft (65) bei leicht geöffneten Klemmbacken (39, 40) nur an der Spannfläche (72) anliegt.

17. Vorrichtung nach einem oder mehreren der Ansprüche 9 bis 16, dadurch gekennzeichnet, dass das mechanische Greifwerkzeug (37) leichte Schwingbewegungen ausführt, sobald das von der Greifeinrichtung (30) gehaltene Ventil (64) mit seinem Ventilschaftende (67) auf die Öffnung der Ventilschaftbohrung (68) aufgesetzt ist.

18. Vorrichtung nach einem oder mehreren der Ansprüche 9 bis 17, dadurch gekennzeichnet, dass die beiden Klemmbacken (39, 40) des mechanischen Greifwerkzeugs (37) an eine gemeinsame Kolben-Zylinder-Einheit (33) angeschlossen sind, die ihre Öffnungs- und Schliessbewegung synchron steuert.

19. Vorrichtung nach einem oder mehreren der Ansprüche 9 bis 18, dadurch gekennzeichnet, dass zwischen dem Saugkopf (32) und dem mechanischen Greifwerkzeug (37) ein Signalgeber (42) und ein Sensor (41) quer zur Längsachse (48) der Lineareinheit (31) angeordnet sind, die zwischeneinander einen Durchgang für das Ventil (64) und den Saugkopf (32) frei lassen.

20. Vorrichtung nach einem oder mehreren der Ansprüche 9 bis 19, dadurch gekennzeichnet, dass die Lineareinheit (31) an einen Sensor angeschlossen ist, der beim Aufsitzen des Ventilschaftendes (67) auf einer Ventilschaftdichtung (71) der Ventilschaftbohrung (68) eine Ausfahrbewegung des Saugkopfes (32) zum Durchdrücken des Ventilschaftes (65) durch die Ventilschaftdichtung (71) steuert.

21. Vorrichtung nach einem oder mehreren der Ansprüche 9 bis 20, dadurch gekennzeichnet, dass die Greifeinrichtung (30) eine Vielzahl von Paaren von Saugköpfen (32) und Klemmbackenpaaren (39, 40) aufweist, mit denen mehrere Ventile (64) gleichzeitig transportierbar und in einen Zylinderkopf (61) einsetzbar sind.

22. Vorrichtung nach einem oder mehreren der Ansprüche 9 bis 21, dadurch gekennzeichnet, dass die Saugköpfe (32) an einer gemeinsamen Lineareinheit (31) und/oder an einem gemeinsamen Auslegerarm (28) angebracht sind und jeweils eigene Steuerleitungen zum Aufbau und Abbau von Unterdruck aufweisen.

## Claims

1. Method for fitting valves (64) in the cylinder head (61) of an engine by means of a gripping device (30), whereby the valves (64) are introduced freely by their valve shanks (65) into valve shank bores (68) of the cylinder head (61), characterized in that the valves (64) are removed from a transport container (50) by the gripping device (30), moved with their valve shanks (65) into an inclined position to the respective valve shank bores (68) and, in said inclined position, the valves (64) are placed upon orifices (69) of guide bushings (63) of the valve shank bores (68) in the cylinder head (61), then the valves (64) are erected to align their axes with the axes of the valve shank bores (68) and, after this, the gripping device (30) is opened and the valves (64) are lowered into the valve shank bores (68) by their deadweight.

2. Method according to Claim 1, characterized in that the respective valve (64) is placed upon the orifice of the guide bushing (63) in an inclined position of its valve shank (65) at an angle of 5°-45°, preferably 25°, relative to the axis of the valve guide.

3. Method according to Claim 1 and/or 2, characterized in that the respective valve (64) is subjected to a slight oscillating movement after the valve shank end (67) has been placed upon the orifice (69) of the valve shank bore (68).

4. Method according to Claim 3, characterized in that the oscillating movement occurs transversely to the axis of the valve shank (65).

5. Method according to one or more of Claims 1 to 4, characterized in that the movements of the valves (64) during the assembly operation are sensed and controlled by sensors (41).

6. Method according to one or more of Claims 1 to 5, dharacterized in that, after the valve shank (65) is laced upon the orifice (69) of the valve shank bore (68), the gripping tool (37) is partially opened and, after the axes of valve shank (65) and valve shank bore (68) are aligned, the gripping tool (37) is spread continually so that the valve (64) can be introduced completely into the valve shank bore (68).

7. Method according to one or more of Claims 1 to 6, characterized in that the valve (64) is pressed with its valve shank (65) through the valve guide, and possibly through a valve shank seal (71) fitted there, by a linear movement of at least a part of the gripping device (30).

8. Method according to one or more of Claims 1 to 7, characterized in that a plurality of valves (64) are simultaneously removed from a transport container (50) and inserted by their valve shanks (65) into the respective valve guides.

9. Apparatus for fitting valves (64) in the cylinder head (61) of an engine, having a gripping device (30) for feeding the valves (64) to the cylinder head (61) which exhibits two holding elements actuable independently of each other and is both lineally movable and pivotable, characterized in that one of the holding elements is constructed as a lineally movable suction head (32) mounted on a linear unit (31) and the other holding element is constructed as a mechanical gripping tool (37) arranged transversely to the movement direction of the suction head (32), which exhibits two clamp jaws (39, 40) movable relative to each other, and that the gripping device (30) is mounted pivotably about an axis (36) oriented transversely to the longitudinal axis (48) of the linear unit (31).

10. Apparatus according to Claim 9, characterized in that the gripping device (30) is mounted on a jib arm (28) connected to a guide housing (24) and is movalbe in the directions of three axes of coordinates (X, Y, Z) located at right angles to each other.

11. Apparatus according to Claim 9 or 10, characterized in that the gripping device (30) exhibits a piston/cylinder unit (35) connected to the jib arm (28), by which the gripping device (30) can be moved into an inclined position relative to the vertical (Z) and is pivotable about the axis (36) oriented transversely to the vertical.

12. Apparatus according to one or more of Claims 9 to 11, characterized in that the suction head (32), in the longitudinal direction of the linear unit (31), and the mechanical gripping tool (37), transversely to the linear unit (31), are movable and controllable independently of each other.

13. Apparatus according to one or more of Claims 9 to 12, characterized in that the clamp jaws (39, 40) of the mechanical gripping tool (37) are movalbe, particularly pivotable, totally out of the orbit of the linear unit (31) and of the valves (64) which it carries.

14. Apparatus according to one or more of Claims 9 to 13, characterized in that tensioning surfaces (46, 47) of the two clamp jaws (39, 40) of the gripping tool (37) form in cross-section the contour of a possibly symmetrical polygon figure, a pentagon or prism for example.

15. Apparatus according to one or more of Claims 9 to 14, characterized in that at least one clamp jaw (40) exhibits a trough-shaped cross-section, the base of which is constructed as a tensioning surface (72) and is wider than the diameter of the valve shank (65).

16. Apparatus according to Claim 15, characterized in that the tensioning surface (72) of the clamp jaw (40) braces the valve shank (65) as a support in the inclined position of the valve (64), so that the valve shank (65) is in contact only with the tensioning surface (72) when the clamp jaws (39, 40) are slightly open.

17. Apparatus according to one or more of Claims 9 to 16, characterized in that the mechanical gripping tool (37) executes slight oscillating movements as soon as the valve (64) held by the gripping device (30) is placed by its valve shank end (67) upon the orifice (69) of the valve shank bore (68).

18. Apparatus according to one or more of Claims 9 to 17, characterized in that the two clamp jaws (39, 40) of the mechanical gripping tool (37) are connected to a common piston/cylinder unit (33) which controls their opening and closing movements synchronously.

19. Apparatus according to one or more of Claims 9 to 18, characterized in that a signal transducer (42) and a sensor (41), which leave clear between themselves a passage for the valve (64) and the suction head (32), are arranged transversely to the longitudinal axis (48) of the linear unit (31) between the suction head (32) and the mechanical gripping tool (37).

20. Apparatus according to one or more of Claims 9 to 19, characterized in that the linear unit (31) is connected to a sensor which controls an extending movement of the suction head (32) to press the valve shank (65) through the valve shank seal (71) when the valve shank end (67) rests upon a valve shank seal (71) of the valve shank bore (68).

21. Apparatus according to one or more of Claims 9 to 20, characterized in that the gripping device (30) exhibits a plurality of pairs of suction heads (32) and pairs of clamp jaws (39, 40) by which a plurality of valves (64) can be simultaneously transported and inserted into a cylinder head (61).

22. Apparatus according to one or more of Claims 9 to 21, characterized in that the suction heads (32) are mounted on a common linear unit (31) and/or a common jib arm (28) and respectively exhibit own control pipes in each case to build up and reduce negative pressure.

## Revendications

1. Procédé de montage de soupapes (64) dans la culasse (61) d'un moteur à l'aide d'un organe de prise (30), avec lequel les soupapes (64), avec leurs tiges de soupape (65), sont introduites librement dans des alésages (68) de tiges de soupape de la culasse (61), caractérisé par le fait qu'on prélève les soupapes (64) d'un récipient de transport (50) avec l'organe de prise (30), qu'on les amène, avec leurs tiges de soupape (65) en position inclinée par rapport aux alésages (68) de tiges de soupape respectifs et que, dans cette position inclinée, on place les soupapes (64) sur les orifices (69) de manchons de guidage (63) des alésages (68) de tiges de soupape dans la culasse, puis on redresse les soupapes (64) pour aligner leurs axes avec les axes des alésages de tiges de soupape (68), et ensuite on desserre l'organe de prise (30) et on laisse pénétrer les soupapes (64), par leur propre poids, dans les alésages (68) de tiges de soupape.

2. Procédé selon la revendication 1, caractérisé par le fait qu'on place la soupape respective (64) sur l'orifice du manchon de guidage (63) en une position inclinée de sa tige de soupape (65) sous un angle de 5–45°, de préférence 25°, par rapport à l'axe du guide de soupape.

3. Procédé selon l'une ou plusieurs des revendications 1 ou 2, caractérisé par le fait qu'après la pose de l'extrémité (67) de tige du soupape sur l'orifice (69) de l'alésage (68) de tige de soupape, on soumet la soupape (64) respective à un léger mouvement d'oscillation.

4. Procédé selon la revendication 3, caractérisé par le fait que le mouvement d'oscillation s'effectue transversalement à l'axe de la tige de soupape (65).

5. Procédé selon l'une ou plusieurs des revendications 1 à 4, caractérisé par le fait qu'on analyse et commande par des capteurs (41), pendant le processus de montage, les mouvements des soupapes (64).

6. Procédé selon l'une ou plusieurs des revendications 1 à 5, caractérisé par le fait qu'après la pose de la tige de soupape (65) sur l'orifice (69) de l'alésage (68) de tige de soupape, on desserre partiellement l'outil de prise (37) et après l'alignement de l'axe de tiges de soupape (68) et de l'alésage (68) de tige de soupape, on remue sans arrêt l'outil de prise (37) jusqu'à ce que la soupape (64) puisse être introduite complètement dans l'alésage (68) de tige de soupape.

7. Procédé selon l'une ou plusieurs des revendications 1 à 6, caractérisé par le fait que, par un mouvement linéaire d'au moins une partie de l'organe de prise (30), on repousse la soupape (64) avec sa tige de soupape à travers le guide de soupape et éventuellement un joint d'étanchéité (71) de tige de soupape qui s'y trouve.

8. Procédé selon l'une ou plusieurs des revendications 1 à 7, caractérisé par le fait qu'on prélève simultanément plusieurs soupapes (64) d'un récipient de transport (50) et on les introduit avec leurs tiges de soupape (65) dans les guides de soupape respectifs.

9. Dispositif de montage de soupapes (64) dans la culasse (61) d'un moteur, avec un moyen de prise (30) pour l'amenée des soupapes (64) à la culasse (61), qui possède deux organes de retenue actionnables indépendamment l'un de l'autre et qui est aussi bien déplaçable en ligne droite que déplacement par pivotement, caractérisé par le fait que l'un des organes de retenue est réalisé sous forme d'une tête aspirante (32), déplaçable en ligne droite, montée sur un ensemble en ligne (31) et que l'autre organe de retenue est réalisé sous forme d'un outil de prise (37) mécanique, disposé transversalement à la direction de déplacement de la tête aspirante (32), et possédant deux mâchoires de serrage (39, 40) déplaçables l'une par rapport à l'autre, et que le moyen de prise (30) est monté pivotant autour d'un axe (36) s'étendant transversalement à l'axe longitudinal (48) de l'ensemble en ligne (31).

10. Dispositif selon la revendication 9, caractérisé par le fait que le moyen de prise (30) est monté sur un arbre console (28) relié à un carter de guidage (24) et est déplaçable dans les directions de trois axes coordonnées perpendiculaires l'un à l'autre (X, Y, Z).

11. Dispositif selon la revendication 9 ou 10, caractérisé par le fait que le moyen de prise (30) possède un vérin (35), rattaché au bras console (28), avec lequel le moyen de prise (30) est amenable en position inclinée par rapport à la verticale (Z) et est déplaçable par pivotement autour de l'axe (36) s'étendant transversalement à la verticale.

12. Dispositif selon l'une ou plusieurs des revendications 9 à 11, caractérisé par le fait que la tête aspirante (32), en direction longitudinale de l'ensemble en ligne (31), et l'outil de prise (37) mécanique, transversalement à l'ensemble en ligne (31), sont déplaçables et commandables indépendamment l'un de l'autre.

13. Dispositif selon l'une ou plusieurs des revendications 9 à 12, caractérisé par le fait que les mâchoires de serrage (39, 40) de l'outil de prise mécanique (37) sont susceptibles d'être entièrement écartées, en particulier par pivotement, de la trajectoire de l'ensemble en ligne (31) et des soupapes (64) qu'il porte.

14. Dispositif selon l'une ou plusieurs des revendications 9 à 13, caractérisé par le fait que les faces de serrage (46, 47) des deux mâchoires (39, 40) de l'outil de prise (37) forment, en coupe, le contour d'un trait polygonal, éventuellement symétrique, par exemple d'un pentagone ou d'un prisme.

15. Dispositif selon l'une ou plusieurs des revendications 9 à 14, caractérisé par le fait qu'au moins une mâchoire de serrage (40) présente, en coupe, une forme d'auge dont la base est agencée en face de serrage (72) et qui est d'un diamètre supérieur à celui de la tige de soupape (65).

16. Dispositif selon la revendication 15, caractérisé par le fait que la face de serrage des mâchoires de serrage (40) porte, en tant que support, la tige de soupape (65) en position inclinée de la soupape (64) de manière que, lorsque les mâchoires de serrage (39, 40) sont légèrement écartées, la tige de soupape (65) ne s'applique que sur la face de serrage (72).

17. Dispositif selon l'une ou plusieurs des revendications 9 à 16, caractérisé par le fait que l'outil de prise mécanique (37) effectue de légers mouvements d'oscillation dès que la soupape (64), maintenue par le moyen de prise (30), est appliquée par son extrémité de tige (67) sur l'orifice (69) de l'alésage (68) de tige de soupape.

18. Dispositif selon l'une ou plusieurs des revendications 9 à 17, caractérisé par le fait que les deux mâchoires de serrage (39, 40) de l'outil de prise mécanique (37) sont reliées à un vérin (33) commun qui commande, en synchronisme, leurs mouvements d'ouverture et de fermeture.

19. Dispositif selon l'une ou plusieurs des revendications 9 à 18, caractérisé par le fait qu'entre la tête aspirante (32) et l'outil de prise mécanique (37) sont intercalés, transversalement à l'axe longitudinal de l'ensemble en ligne (31), un émetteur de signal (42) et un capteur (41) qui laissent libre, entre eux, le passage par une soupape (64) et la tête aspirante (32).

20. Dispositif selon l'une ou plusieurs des revendications 9 à 19, caractérisé par le fait que l'ensemble en ligne (31) est raccordé à un capteur qui, lors de l'application de l'extrémité (67) de tige de soupape sur un joint (71) de tige de soupape de l'alésage (68) de tige de soupape, commande la sortie de la tête aspirante (32) pour repousser la tige de soupape (65) à travers le joint (71) de tige de soupape.

21. Dispositif selon l'une ou plusieurs des revendications 9 à 20, caractérisé par le fait que le moyen de prise (30) comporte une pluralité de paires de têtes aspirantes (32) et de paires de mâchoires de serrage (39, 40) avec lesquelles plusieurs soupapes (64) peuvent simultanément être transportées et introduites dans une culasse (61).

22. Dispositif selon l'une ou plusieurs des revendications 9 à 21, caractérisé par le fait que les têtes aspirantes (32) sont montées sur un ensemble en ligne (31) commun et/ou sur un bras-support (28) commun et possèdent chacune leurs propres conduits de commande pour l'application et la suppression du vide.

*Fig. 1*

Fig. 2

**Fig. 3**

Fig. 4

Fig. 5

Fig.7

Fig. 6

21

Fig. 9

Fig. 8

**Fig.12**

**Fig.11**

**Fig. 10**

Fig.13